# EUROPÄISCHE PATENTANMELDUNG

(11) **EP 4 276 000 A1**
(43) Veröffentlichungstag der Anmeldung: **15.11.2023**
(21) Anmeldenummer: 23172796.7
(22) Anmeldetag: 11.05.2023
(51) Int. Cl.: B62K 21/26

(54) **FAHRRADGRIFF MIT EINER INNENHÜLSE, EINEM DIE INNENHÜLSE UMGEBENDEN GRIFFTEIL SOWIE EINEM KLEMMELEMENT**

(30) Priorität: 12.05.2022 DE 202022102595 U
(71) Anmelder: Büchel GmbH & Co. Fahrzeugteilefabrik KG, 98544 Zella-Mehlis/Thüringen (DE)
(72) Erfinder: Büchel, Erhard, 36043 Fulda (DE)
(74) Vertreter: Sawodny, Michael-Wolfgang

(57) **Zusammenfassung**

Die Erfindung betrifft einen Fahrradgriff mit einer Innenhülse , einem die Innenhülse umgebenden Griffelement sowie einem Klemmelement, und, ist dadurch gekennzeichnet, dass die Innenhülse und das Klemmelement ein einstückiges Bauteil sind.

## Beschreibung

Die Erfindung betrifft einen Fahrradgriff mit einer Innenhülse, einem die Innenhülse umgebenden Griffteil sowie einem Klemmelement.

Zur Befestigung von Fahrradgriffen ist es bekannt, dass Fahrradgriffe eine Innenhülse aus relativ hartem Material aufweisen, wobei die Innenhülse in der Regel von einem Griffelement aus weicherem Material umgeben ist. Die Innenhülse wird in der Regel über den Fahrradlenker geschoben und beispielsweise mit einem schellenartigen Klemmelement am Fahrradlenker klemmend fixiert. Eine derartige Ausgestaltung eines Fahrradgriffes ist beispielsweise aus der EP 04764244 A2 oder der DE 20 2016 003 699 U1 bekannt geworden.

Nachteilig an den Fahrradgriffen aus dem Stand der Technik war, dass Innenhülse und Klemmelement separate Bauteile waren. Wollte man den Fahrradgriff am Fahrradlenker befestigen, so war es notwendig, die getrennten Elemente am Fahrradlenker zu verbinden, was in der Regel sehr aufwendig war. Außerdem war es nachteilig, dass Innenhülse und Klemmelement als separate Bauteile auf dem Fahrradlenker angebracht werden mussten, was oftmals schwierig war

Aufgabe der Erfindung ist es daher, einen Fahrradgriff anzugeben, der die Nachteile des Standes der Technik überwindet und einen Griff zur Verfügung stellt, bei dem der Komfort insbesondere im Bereich des Klemmelementes verbessert ist.

Die Lösung der erfindungsgemäßen Aufgabe erfolgt mit den Merkmalen des Anspruches 1.

Der erfindungsgemäße Fahrradgriff zeichnet sich dadurch aus, dass Innenhülse und Klemmelement ein einstückiges Bauteil sind. Durch eine derartige Ausgestaltung ist eine einfache Herstellbarkeit gegeben, Fertigungsfehler aufgrund des Zusammenbaus unterschiedlicher Bauteile werden vermieden. Des Weiteren hat der einstückige Handgriff den Vorteil, dass man den Handgriff einfach über den Fahrradlenker ziehen und am Fahrradlenker befestigen kann. Eine derartige Montage ist sehr effizient, da man bis auf die Klemme, die einstückig mit der Innenhülse verbunden ist, keine weiteren Bauteile wie im Stand der Technik anbringen muss. Zudem werden Vorteile im Produktionsprozess durch die einteilige bzw. einstückige Ausführung erreicht und der Zeitaufwand der Montage minimiert.

Besonders bevorzugt ist es, wenn in einer Ausgestaltung der Erfindung die Innenhülse wenigstens eine schlitzförmige Öffnung aufweist. Die schlitzförmige Öffnung dient dazu, eine bessere Verbindung zwischen der Innenhülse und dem Greifelement zur Verfügung zu stellen. So ist es möglich, dass der weiche Kunststoff des Greifelements in die schlitzförmige Öffnung der Innenhülse eindringt und eine feste Verbindung zur Verfügung stellt.

In einer besonders bevorzugten Ausgestaltung ist die Innenhülse und das Klemmelement ein einziges Spritzgussteil, das aus einem Hartkunststoff hergestellt sein kann. Besonders bevorzugt handelt es sich bei dem Hartkunststoff um ein Polypropylen, insbesondere ein Polypropylen mit Glasfaseranteil. Ein Polypropylen mit Glasfaseranteil zeichnet sich durch eine hohe Festigkeit aus Im Gegensatz zur Innenhülse und zum Klemmelement, das aus einem Hartkunststoff wie zuvor beschrieben gefertigt ist, ist der Griff bzw. das Griffelement, das die Innenhülse vollständig umgibt, aus Komfortgründen aus einem Weichkunststoff hergestellt. Hierbei umschließt das Griffelement den Hartkunststoff einschließlich Klemmelement vollständig und weist lediglich Öffnung für ein Befestigungselement des Klemmelementes auf, wobei diese Öffnungen von außen zugänglich sind.

Als Weichkunststoff kommt bei dem erfindungsgemäßen Fahrradgriff insbesondere ein thermoplastischer Elastomer zum Einsatz. Mögliche thermoplastische Elastomere sind thermoplastische Olefine (TPE-O), ein Sytrol-Blockcopolymer (TPE-S), ein vulkanisierter PP/EPDM-Compound (TPE-V), ein Copolyester Compound (TPE-E), ein thermoplastisches Polyurethan (TPE-U) sowie ein thermoplastisches Polyamid (TPE-A).

Um das Klemmelement am Fahrradlenker zu befestigen ist vorgesehen, dass das Klemmelement wenigstens eine Aufnahme für ein Befestigungselement, insbesondere eine Schraube, umfasst. Durch das Befestigungselement in Form einer Schraube wird das Klemmelement zusammengezogen und somit der Fahrradgriff fest auf dem Lenker befestigt. Besonders bevorzugt ist es, wenn, wie oben beschrieben, die komplette Innenhülse und das Klemmelement von einem weichen Kunststoff vollständig umgeben sind. Um das Befestigungselement, insbesondere die Schraube, anziehen zu können, ist es von Vorteil, wenn in das Griffelement Öffnungen eingebracht sind, durch die die Schraube festgezogen werden kann.

Um den Schraubenkopf aufzunehmen ist es besonders bevorzugt, wenn die Aufnahme Ausnehmungen für einen Schraubenkopf umfasst. Besonders vorteilhafter Weise weist das Klemmelement zwei zueinander beabstandete Ansätze zur Aufnahme des Befestigungselementes auf.

Die Erfindung soll nunmehr anhand der Figuren beispielhaft beschrieben werden.

Es zeigen:
- Fig. 1A:: eine dreidimensionale Ansicht einer ersten Ausgestaltung eines erfindungsgemäßen Fahrradgriffes, wobei die innerhalb des Griffes liegende Innenhülse nicht vollständig gezeigt wird.
- Fig. 1 B:: eine dreidimensionale Ansicht einer zweiten Ausgestaltung eines erfindungsgemäßen Fahrradgriffes, wobei die innerhalb des Griffes liegenden Innenhülse separat und vollständig gezeigt wird.
- Fig. 2A:: Ansicht einer ersten Ausführungsform eines erfindungsgemäßen Fahrradgriffs mit eingedrehtem Befestigungselement in Form einer Schraube
- Fig. 2B:: eine dreidimensionale Ansicht einer zweiten Ausführungsform eines Fahrradgriffes mit eingedrehtem Befestigungselement und unterbrochenem Griffelement.
- Fig. 3A:: Vorderansicht einer ersten Ausführungsform eines erfindungsgemäßen Fahrradgriffs mit eingedrehtem Befestigungselement
- Fig. 3B:: Vorderansicht einer zweiten Ausführungsform eines erfindungsgemäßen Fahrradgriffes mit unterbrochenem Griffelement
- Fig. 4A:: Draufsicht auf eine erste Ausgestaltung eines erfindungsgemäßen Fahrradgriffes mit eingedrehtem Befestigungselement mit vollständig dargestellter Innenhülse und Klemmelement, das von dem Griffelement umgeben wird
- Fig. 4B:: Draufsicht auf eine zweite Ausgestaltung eines erfindungsgemäßen Fahrradgriffes mit detaillierter Darstellung der vom Griffelement umgebenen Innenhülse mit Klemmelement, wobei das Griffelement unterbrochen bzw. durchbrochen ist.

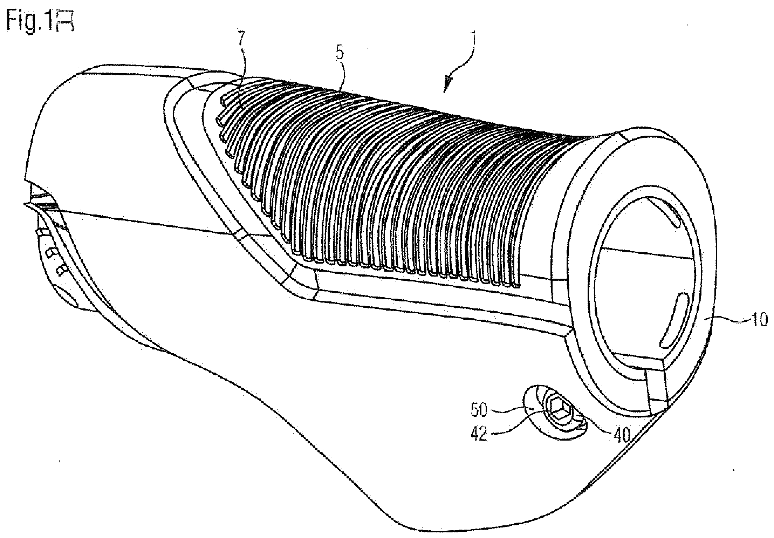

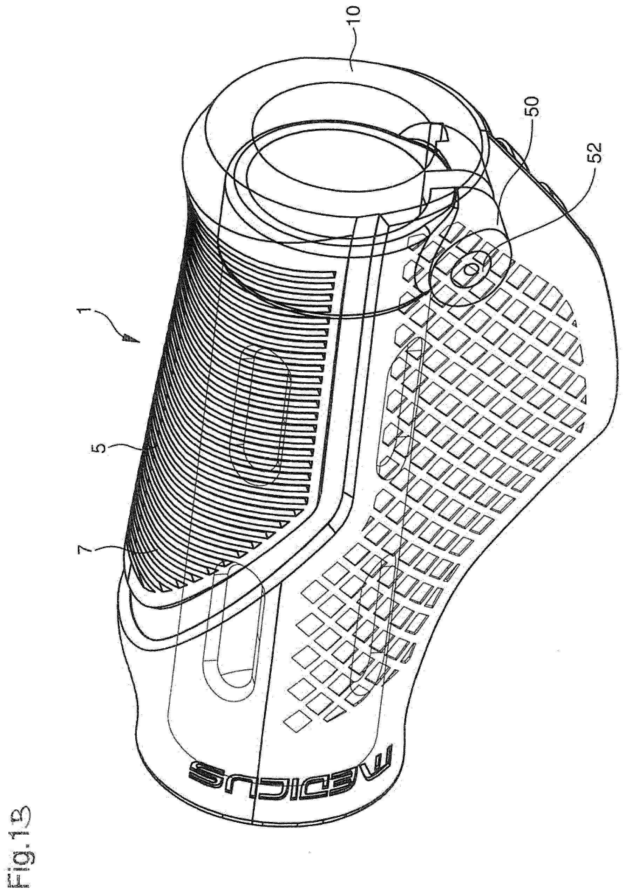

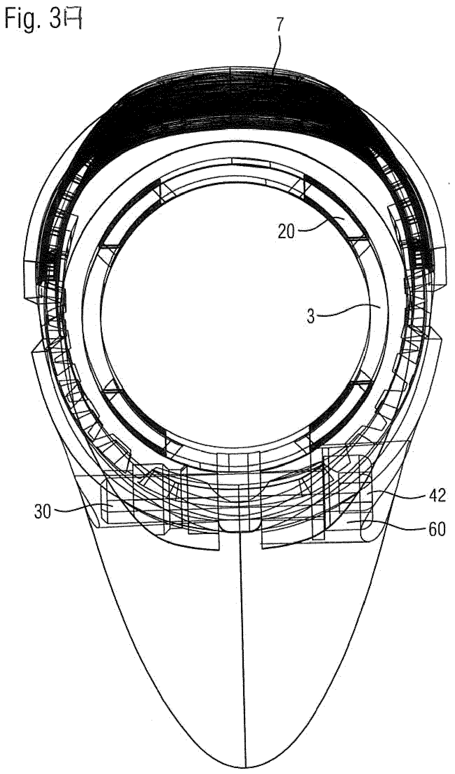

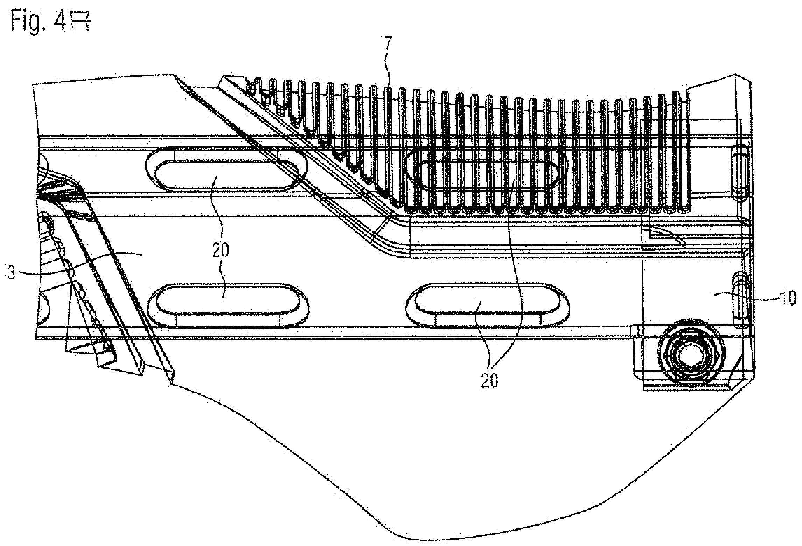

Figur 1A zeigt eine erste Ausführungsform eines Fahrradgriffes 1, der eine erfindungsgemäße Innenhülse 3 (in Figur 3A, 4A dargestellt) aufweist, die von einem Griffelement 5 vollständig umgeben ist. Das Griffelement 5, dass die Innenhülse vollständig umgibt, ist bevorzugt aus einem Weichkunststoff hergestellt. Der Weichkunststoff, der die Innenhülse vollständig umschließt, ist ergonomisch geformt und weist einen Griffbereich 7 auf. Wie in Figur 1 dargestellt ist zur Erhöhung der Grifffestigkeit der Griffbereich 7 geriffelt ausgebildet.

Erfindungsgemäß ist vorgesehen, dass die Innenhülse 3 und das Klemmelement 10 einstückig ausgebildet sind. Die Innenhülse 3 und das Klemmelement 10 sind in Figur 1A verdeckt und nur in den Figuren 3A und 4A deutlich zu sehen. Erfindungsgemäß bildet die Innenhülse 3 und das Klemmelement 10, mit dem der Griff am Lenker fest montiert wird, ein einstückiges Bauteil aus. Bei der ersten Ausführungsform der Erfindung entspricht die Länge der Innenhülse mit dem Klemmelement der Länge des Griffelementes, so dass die Innenhülse mit dem Klemmelement auf ihrer gesamten Länge vollständig umschlossen wird, d.h. das Klemmelement 10 und der Abschluss des Griffelementes liegen in derselben Ebene. Die einstückige Ausbildung hat insbesondere Vorteile in Bezug auf eine einfache Fertigung. Wie in Figur 4A dargestellt, weist die Innenhülse 3 wenigstens eine, bevorzugt mehrere, schlitzförmige Öffnung 20 auf. Die in die Innenhülse 3 eingebrachte schlitzförmige Öffnung bzw. mehrere schlitzförmige Öffnungen 20 dienen dazu, dass eine bessere Verbindung zwischen dem Weichkunststoff des Griffelements 5 und der Innenhülse 3 zur Verfügung gestellt wird. Ein weiterer Vorteil ist, dass die Griffe vollautomatisch produziert werden können.

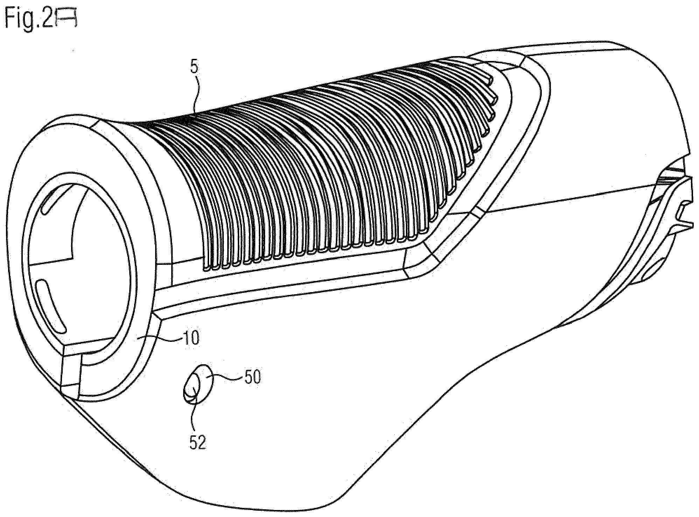

In Figur 1A des Weiteren zu erkennen ist die in das Griffelement eingebrachte Öffnung 50, in die, wie in Figur 2A dargestellt, eine Schraube 40 eingesetzt werden kann. Die in die Öffnung 50 eingesetzte Schraube 40 greift dann z. B. in ein Gewinde des Klemmelementes ein und zieht das Klemmelement 10 beim Anziehen der Schraube derart zusammen, dass der Griff bestehend aus Griffelement und Innenhülse sicher am Lenker gehalten wird. Alternativ zu einem Gewinde, das in das Klemmelement eingebracht ist, kann auf der dem Schraubenkopf 42 der Schraube 40 gegenüberliegenden Seite eine Mutter 52 (Figur 2A), die in die Öffnung 50 versenkt ist, vorgesehen sein. Die Schraube 40 wird dann in die Mutter 50 (Figur 2A) eingedreht und das Klemmelement 10 für ein Halten am Lenker zusammengezogen.

Nach Aufbringen der Innenhülse 3 auf die Lenkerstange (nicht gezeigt) und Festziehen des Klemmelementes 10, das einstückig mit der Innenhülse ist und bevorzugt aus einem Hartkunststoff besteht, wird die Innenhülse 3 und das Klemmelement bevorzugt mit einem Weichkunststoff umspritzt.

Bei dem Weichkunststoff handelt es sich bevorzugt um ein thermoplastisches Elastomer, beispielsweise ein thermoplastisches Olefin, ein Sytrol-Blockcopolymer (TPE-S), einen vulkanisierter PP/EPDM-Compound (TPE-V), einen Copolyester Compound (TPE-E), ein thermoplastisches Polyurethan (TPE-U) oder ein thermoplastisches Polyamid (TPE-A).

Wie zuvor beschrieben wird, sind sowohl die Innenhülse 3 wie auch das Klemmelement 10 aus einem Hartkunststoff gefertigt. Bevorzugt handelt es sich hierbei um ein Spritzguss-Teil. Als Hartkunststoff eignet sich hier insbesondere ein Polypropylen, bevorzugt mit einem Glasfaseranteil. Der Glasfaseranteil des Polypropylens sorgt dafür, dass eine hohe Zugfestigkeit zur Verfügung gestellt wird.

In Figur 1B ist ein Ausgestaltung der Erfindung gezeigt, bei der die Innenhülse mit Klemmelement nicht der Länge des Griffelementes entspricht, sondern innenliegend im Griffelement 5 ist, d.h. die Länge der Innenhülse ist kürzer als die des Griffelementes. Um sowohl die innenliegende Innenhülse 3 und das im Griffelement 5 liegende Klemmelement 10 zu zeigen, sind in Figur 1B diese zusätzlich zum überdeckenden Griffelement 5 dargestellt. Insbesondere ist auch die Öffnung 50 des Klemmelementes 10 und die in die Öffnung 50 eingesetzte Mutter 52 gezeigt. Generell werden für gleiche Bauteile wie in Figur 1A in Figur 1B dieselben Bezugsziffern gewählt.

In Figur 2A ist wiederum ein Griff mit vom Griffelement 5 vollständig umschlossener einstückigen Innenhülse (nicht dargestellt) mit Klemmelement 10 gezeigt. Aufgrund der in Figur 2A dargestellten Seitenansicht des Griffelementes ist die Innenhülse nicht zu erkennen, da die Innenhülse und die Klemmeinrichtung vollständig vom Griffelement umgeben ist. Gleiche Bauteile wie in Figur 1A sind mit denselben Bezugsziffern belegt. Die Schraube 40 (Figur 1A) kann entweder in ein Gewinde der Aufnahme (nicht gezeigt) eingreifen und das Klemmelement und damit die mit dem Klemmelement verbundene Innenhülse fest am Lenker befestigt oder in eine Mutter 52 (Figur 2A). Bei der in Figur 2A dargestellten Ausführungsform greift die Schraube 40 (Figur 1A) mit Schraubenkopf 42 nicht in ein Gewinde zum Festziehen des Klemmelementes ein, sondern in eine in der Öffnung 50 versenkte Mutter 52. Deutlich zu erkennen ist auch, dass in das über die Innenhülse mit Klemmelement hinausragende Griffelement die Öffnung 50 eingebracht ist, die es zulässt, dass bspw. mit einem Schraubenzieher in die Schraube 40 gemäß Figur 1A oder 2A eingegriffen und die Innenhülse mit der Schraube festgezogen wird. Besonders bevorzugt ist es, wenn das Griffelement nur eine einzige Öffnung 50 aufweist und ansonsten das Griffelement die Innenhülse und das Klemmelement vollständig umgibt.

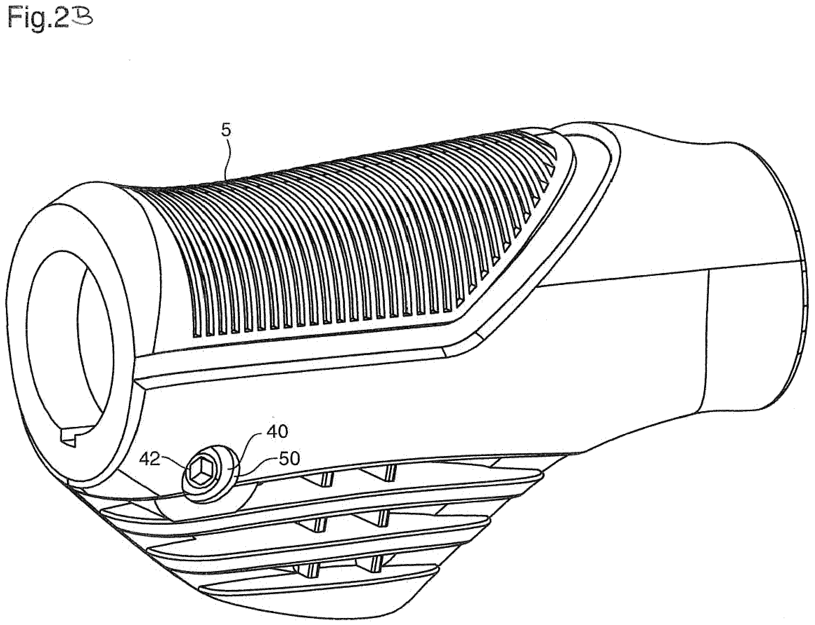

Figur 2B zeigt eine alternative Ausgestaltung eines Fahrradgriffes mit in das Griffelement eingebrachten Durchbrechungen 100. Die Durchbrechungen 100 im Griffelement vermindern die Steifigkeit des die Innenhülse umgebenden Griffelementes und tragen zu einer hohen Flexibilität bei. Gleiche Bauelemente wie in den vorausgegangenen Figuren tragen dieselben Bezugsziffern.

Figur 3A zeigt eine Vorderansicht der erfindungsgemäßen Ausgestaltung einer ersten Ausführungsform eines Fahrradgriffes mit einer einstückigen Innenhülse mit Klemmelement von vorne.

Deutlich zu erkennen ist die Schraube 40 mit Schraubenkopf 42, die in der dargestellten Ausführungsform in ein Gewinde (nicht dargestellt) der Aufnahme 30 eingreift und dort angezogen wird. Die Innenhülse ist wiederrum mit 3 bezeichnet, der die Innenhülse 3 umschließende Griff aus Weichkunststoff mit 7. Deutlich zu erkennen auch die in die Innenhülse eingebrachten Schlitze bzw. schlitzförmigen Öffnungen 20. Bevorzugt umfasst die Öffnung 30 für die Schraube auch eine Ausnehmung 60, die derart ausgestaltet ist, dass sie den Schraubenkopf 42 der Schraube 40 aufnimmt.

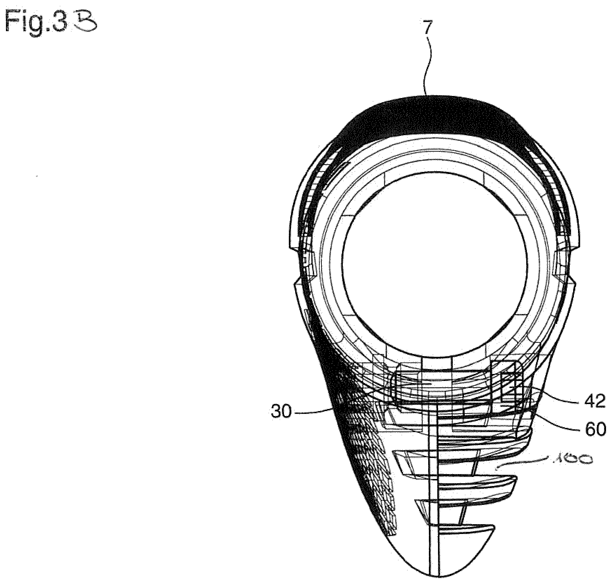

Figur 3B zeigt eine Vorderansicht einer zweiten Ausführungsform eines Fahrradgriffes mit einer Innenhülse, einem Klemmelement und einem Griffelement, das Innenhülse und Klemmelement umgibt. Gleiche Bezugsziffern wie in den vorausgehenden Figuren sind für gleiche Bauteile identisch. Die Ausführungsform gemäß Figur 3B weist im Griffelement Durchbrechungen 100 auf. Besonders gut in Figur 3B zu erkennen, ist die Schraube 40 mit Schraubenkopf 42, die in der Ausnehmung 60 der Öffnung 30 zu liegen kommt.

Figur 4A ist eine Seitenansicht eines erfindungsgemäßen Griffes, bei der sowohl der ergonomische Griffbereich 7 mit Riffelung dargestellt ist, wie auch der vollständig vom Weichkunststoff umgebene Bereich der Innenhülse 3 und des Klemmbereiches 10, der ein einstückiges Bauteil ist. Analoge Bauteile wie in den vorausgegangenen Figuren sind wiederrum mit denselben Bezugsziffern belegt. In Figur 4A deutlich zu erkennen sind die schlitzförmigen Öffnungen 20 der Innenhülse 3, die dafür sorgen, dass das weichere Material des Griffelelementes 5 eine gute Verbindung mit dem harten Material der Innenhülse 3 eingeht.

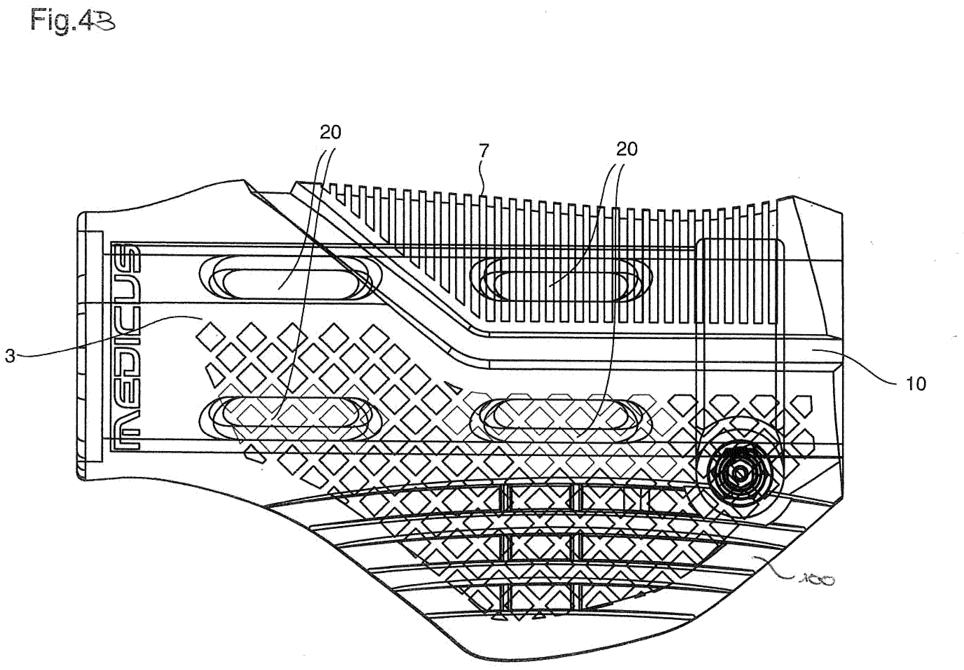

Figur 4B ist eine Seitenansicht einer zweiten Ausführungsform eines erfindungsgemäßen Griffes mit Durchbrechungen 100 im Griffelement. In Figur 4B ist für den Betrachter besonders prominent dargestellt, die vollständig vom Griffelement umgebene Innenhülse 3 mit Öffnungen 20 sowie Klemmelement 10, das mit Hilfe von Schrauben zusammengezogen werden kann. Gleiche Bauteile wie in den vorangegangenen Figuren werden mit gleichen Bezugsziffern gekennzeichnet.

Mit der Erfindung wird erstmals ein sicher an einem Lenker anzuordnender Fahrradgriff angegeben, der sich durch eine einfache Fertigung auszeichnet, da Innenhülse und Klemmelement in einem einzigen Fertigungsschritt als einstückiges Bauteil ausgebildet werden können. Des Weiteren sind durch die vollständige Umschließung durch das Griffelement von Innenhülse und Klemmelement Innenhülse und Klemmelement vor äußeren Einflüssen geschützt Der Griff ist einfach und schnell zu montieren. Neben dem mit der Innenhülse verbundenen Klemmelement ist kein weiteres Klemmelement für die Befestigung am Lenker mehr nötig.

## Patentansprüche

1. Fahrradgriff (1) mit einer Innenhülse (3),
einem die Innenhülse (3) umgebenden Griffelement (5)
sowie einem Klemmelement (10),
**dadurch gekennzeichnet, dass**
die Innenhülse (3) und das Klemmelement (10) ein einstückiges Bauteil sind.

2. Fahrradgriff nach Anspruch 1,
**dadurch gekennzeichnet, dass**
die Innenhülse (3) wenigstens eine schlitzförmige Öffnung (20) aufweist.

3. Fahrradgriff nach einem der Ansprüche 1 bis 2,
**dadurch gekennzeichnet, dass**
die Innenhülse (3) und das Klemmelement (10) ein Spritzguss-Teil aus einem Hartkunststoff ist.

4. Fahrradgriff nach einem der Ansprüche 1 bis 3,
**dadurch gekennzeichnet, dass**
der Hartkunststoff ein Polypropylen, insbesondere ein Polypropylen mit einem Glasfaseranteil, ist.

5. Fahrradgriff nach einem der Ansprüche 1 bis 4,
**dadurch gekennzeichnet, dass**
das Griffelement (5) ein Weichkunststoff ist.

6. Fahrradgriff nach Anspruch 5,
**dadurch gekennzeichnet, dass**
der Weichkunststoff ein thermoplastisches Elastomer ist.

7. Fahrradgriff nach einem der Ansprüche 5 bis 6,
**dadurch gekennzeichnet, dass**
das thermoplastische Elastomer einer der nachfolgenden Stoffe ist:
- ein thermoplastisches Olefin (TPE-O)
- ein Styrol-Blockcopolymer (TPE-S)
- ein vulkanisierter PP/EPDM-Compound (TPE-V)
- ein Copolyester Compound (TPE-E)
- ein thermoplastisches Polyurethan (TPE-U)
- ein thermoplastisches Polyamd (TPE-A)

8. Fahrradgriff nach einem der Ansprüche 1 bis 7,
**dadurch gekennzeichnet, dass**
das Klemmelement (10) wenigstens eine Aufnahme (30) für ein Befestigungselement, insbesondere eine Schraube (40) bevorzugt mit Schraubenkopf ( 42), umfasst.

9. Fahrradgriff nach einem der Ansprüche 1 bis 8,
**dadurch gekennzeichnet, dass**
das Griffelement wenigstens eine Öffnung (50) für das Befestigungselement, insbesondere die Schraube (40) bevorzugt mit Schraubenkopf (42), umfasst.

10. Fahrradgriff nach einem der Ansprüche 1 bis 9,
**dadurch gekennzeichnet, dass**
die Aufnahme (30) eine Ausnehmung (60), bevorzugt für einen Schraubenkopf (42) einer Schraube (40), aufweist.

11. Fahrradgriff nach einem der Ansprüche 1 bis 10,
**dadurch gekennzeichnet, dass**
das Klemmelement (10) einen Klemmschlitz aufweist.

12. Fahrradgriff nach einem der Ansprüche 1 bis 11,
**dadurch gekennzeichnet, dass**
das Griffelement (5) die Innenhülse (3) vollständig umschließt.

13. Fahrradgriff nach einem der Ansprüche 1 bis 12,
**dadurch gekennzeichnet, dass**
das Klemmelement (10) zueinander beabstandete Ansätze zur Aufnahme des Befestigungselementes aufweist.
